# EUROPÄISCHE PATENTSCHRIFT

(11) **EP 2 989 190 B1**
(45) Veröffentlichungstag und Bekanntmachung des Hinweises auf die Patenterteilung: **14.06.2017**
(21) Anmeldenummer: 14719618.2
(22) Anmeldetag: 10.04.2014
(51) Int. Cl.: C11D 1/72, B01F 17/00, C08F 2/26, C08F 2/30

(54) **BENZYLALKOHOLALKOXYLATE ALS LÖSEVERMITTLER FÜR WÄSSRIGE TENSIDLÖSUNGEN**
BENZYL ALCOHOL ALKOXYLATES AS SOLUBILIZERS FOR AQUEOUS SURFACTANT SOLUTIONS
ALCOXYLATE D'ALCOOL BENZYLIQUE COMME AGENT SOLUBILISANT POUR SOLUTIONS AQUEUSES TENSIOACTIVES

(30) Priorität: 24.04.2013 DE 102013007177
(43) Veröffentlichungstag der Anmeldung: 02.03.2016
(73) Patentinhaber: Clariant International Ltd, 4132 Muttenz (CH)
(72) Erfinder: AHRENS, Hendrik, 65830 Frankfurt am Main (DE)
(74) Vertreter: Mikulecky, Klaus
(86) Internationale Anmeldenummer: PCT/EP2014/000967
(87) Internationale Veröffentlichungsnummer: WO 2014/173501

(56) Entgegenhaltungen:
- EP-A1- 1 808 223
- WO-A1-2012/123082
- DE-A1- 4 439 090
- US-A- 5 346 973
- US-A1- 2009 032 069
- US-A1- 2010 041 577

## Beschreibung

Gegenstand der vorliegenden Erfindung sind wässrige Tensidlösungen, die Benzylalkoholalkoxylate enthalten, sowie ihre Verwendung als Emulgatoren für die Emulsionspolymerisation.

Fettalkoholethoxylate werden nach dem Stand der Technik durch Anlagerung von Ethylenoxid an natürliche und synthetische Fettalkohole mit einer Kohlenstoffkettenlänge von 8 bis 22 Kohlenstoffatomen hergestellt. Übliche Fettalkohole zur Ethoxylierung sind Fettalkohole natürlicher Herkunft wie Decylalkohol, Laurylalkohol, Cetylalkohol, Myristylalkohol, Oleylalkohol, Stearylalkohol, oder Mischungen von C₈- bis C₂₂-Kettenschnitten, wie beispielswiese Cocosfettalkohol und Palmkernölalkohol. Weiterhin sind synthetische primäre Alkohole wie Iso-C₁₃-Oxoalkohole, C₁₃/C₁₅-Oxoalkohole, Mischungen linearer, einfach verzweigter oder mehrfach verzweigter Oxoalkohole mit einer mittleren C-Kettenlänge von 10 bis 15 Kohlenstoffatomen, Ziegleralkohole mit 8 bis 22 Kohlenstoffatomen und Guerbetalkohole mit 10, 12, 14, 16 oder 18 Kohlenstoffatomen und lineare und verzweigte, sekundäre Alkanole mit 8 bis 22 Kohlenstoffatomen geeignet. Die verwendeten Alkohole können gesättigt und ungesättigt vorliegen. Dabei wird beobachtet, dass mit Zunahme des Ethoxylierungsgrades der Schmelztemperatur der Ethoxylate ansteigt, um bei hochethoxylierten Fettalkoholethoxylaten etwa gegen einen Grenzwert von 60 °C zu tendieren. Weiterhin kann beobachtet werden, dass die Ethoxylate verzweigter Fettalkohole eine niedrigere Schmelztemperatur zeigen, als Ethoxylate natürlicher, linearer, gesättigter Fettalkohole.

Um für den Transport und die Dosierung im jeweiligen Anwendungsfall ein flüssiges Produkt darreichen zu können, werden die Fettalkoholethoxylate mit Lösemitteln, wie Wasser und organischen Lösemitteln sowie weiteren, schmelzpunktsenkenden Substanzen gemischt. Üblicherweise wird Wasser als Lösemittel verwendet. Wässrige Lösungen von Ethoxylaten natürlicher, linearer, gesättigter oder ungesättigter Fettalkohole sind jedoch in einem Konzentrationsbereich von > 30 Gew.-% und in besonderen Fällen bei 35 Gew.-% bis 100 Gew.-% Fettalkoholethoxylat in Wasser bei Raumtemperatur von 25 °C fest.

Nach dem Stand der Technik wird daher die Zugabe von organischen Lösemitteln und Lösevermittlern beschrieben, um wässrige Lösungen von Fettalkoholethoxylaten fließfähig zu halten.

EP-1251736 beschreibt Tensid/Lösemittelkombinationen aus Alkoholen, Diolen und alkoxylierten Alkoholen.

US-5346973 beschreibt gießbare, flüssige Tensidkonzentrate, die 50 bis 90 Gew.-% Tensidmischung aus gesättigten oder ungesättigten Fettalkoholethoylaten mit 6 bis 22 Kohlenstoffatomen und Alkandiolethoxylaten als Lösevermittler in Wasser enthalten.

US-2002076426A1 beschreibt Terpenalkoholethoxylate als Lösemittel für kosmetische und pharmazeutische Präparationen.

US-2010041577 beschreibt hochkonzentrierte, flüssige Waschmittelkonzentrate, die Glycole, Polylglykole, Glykolether oder Benzylalkohol als Lösemittel enthalten.

WO-2005017047 beschreibt Polyethylenglykole als Löse- und Feuchthaltemittel für Pigmentpräparationen, die Tensidgemische enthalten.

Nachteil bekannter organischer Lösemittel ist ihr niedriger Siedepunkt, der oftmals < 250 °C beträgt. Organische Verbindungen mit einem Siedepunkt von < 250 °C werden nach der EU Verordnung 2004/42/EG als leichtflüchtige organische Verbindungen (VOC) klassifiziert und gelten als umweltschädlich.

Ein weiterer Nachteil bekannter organischer Lösemittel ist ihr ökologisches und toxikologisches Verhalten. Eine Vielzahl von Lösemitteln ist toxisch, haut- und schleimhautreizend, schwer biologisch abbaubar und umwelttoxisch.

Ein Nachteil von Polyethylenglykolen und Polyalkylenglykolen ist ihr hygroskopisches Verhalten. Aus diesem Grund verwendet man Polyethylenglykole und Polyalkylenglykole als Feuchthalte- und Wasserrückhaltemittel wie in der WO-2005017047 beschrieben.

Ein weiterer Nachteil bekannter Lösevermittler ist ihre schlechte Verfügbarkeit und ihre hohen Herstellkosten. Die in US-5346973 beschriebenen Alkandiolethoxylate werden durch Oxidation von Alphaolefinen zum Epoxid, anschließende Hydrolyse zum 1,2-Alkandiolen und Ethoxylierung hergestellt und sind aufgrund der aufwendigen, mehrstufigen Synthese nur schlecht verfügbar.

Aufgabe der vorliegenden Erfindung war es daher, neue Lösemittel mit einem Siedepunkt von < 250 °C aufzufinden, die den Schmelzpunkt bzw. den Schmelzbereich wässriger Lösungen von Ethoxylaten linearer, gesättigter oder ungesättigter Fettalkohole unterhalb von 25 °C Raumtemperatur senken und die obigen Nachteile nicht aufweisen.

Überraschenderweise wurde gefunden, dass Benzylalkoholalkoxylate diese Aufgabe erfüllen.

Gegenstand der Erfindung sind daher wässrige Tensidlösungen, enthaltend
(A) 50,0 bis 90,0 Gew.-% eines Ethoxylates linearer, gesättigter oder ungesättigter Fettalkohole der Formel (I), 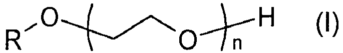 worin
   - R: ein linearer, Alkyl- oder Alkenylrest mit 6 bis 22 Kohlenstoffatomen,
   - n: eine ganze Zahl von 3 bis 100,
   ist,
(B) 0,01 bis 20,0 Gew.-% eines Benzylalkoholalkoxylates der Formel (II), 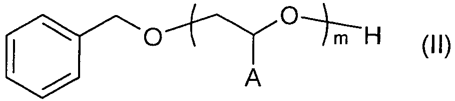 worin
   - A: ein Wasserstoffatom oder eine Methylgruppe,
   - m: eine Zahl von 3 bis 10 darstellt, und
(C) Wasser.

Die erfindungsgemäßen wässrigen Tensidlösungen können darüber hinaus für Alkoxylierungsreaktionen übliche Nebenprodukte enthalten. Übliche Nebenprodukte der Alkoxylierungsreaktion sind geringe Spuren an Diethylenglykol, Polyethylenglykolen, Propylenglykol, Dipropylenglykol, Polypropylenglykole und Mischpolymere aus Ethylenglykol und Propylenglykol, weiterhin Katalysatorreste wie Natrium-, Kalium-, Calciumsalze. Übliche Natrium-, Kalium-, Calciumsalze sind die Salze der Essigsäure, Propionsäure, Milchsäure oder höherer Carbonsäure wie beispielsweise die Isononansäure. Weiterhin können die erfindungsgemäßen wässrigen Tensidlösungen nicht umgesetzte Startalkohole enthalten. Dazu zählen nicht umgesetzte Fettalkohole mit 6 bis 22 Kohlenstoffatomen und nicht umgesetzter Benzylalkohol. Der Gehalt solcher Nebenprodukte und nicht umgesetzter Startalkohole beträgt üblicherweise < 1 Gew.-%, bezogen auf die wässrige Tensidlösung. Unter dem Begriff der "höheren Carbonsäure" wurde Carbonsäure mit 6 bis 18 Kohlenstoffatomen verstanden. Ein Beispiel hierfür ist die Isononansäure.

Komponente (A) ist ein Ethoxylat linearer, gesättigter oder ungesättigter Fettalkohole mit 6 bis 22, vorzugsweise 12 bis 18 Kohlenstoffatomen und deren Gemische. Geeignete Fettalkohole sind Hexan-1-ol, Oktan-1-ol, Dekan-1-ol, Laurylalkohol, Myristylalkohol, Cetylalcohol, Stearylalkohol, Eicosanol, Behenylalkohol, Hexadecenol, Oleylalkohol und Linoleylalkohol. Die Ethoxylate liegen als homologe Reihe mit einem mittleren Ethoxylierungsgrad vor. Der mittlere Ethoxylierungsgrad der Komponente (A) beträgt 3 bis 100, vorzugsweise 5 bis 80 und besonders bevorzugt 8 bis 50.

Komponente (B) ist ein Benzylalkoholalkoxylat, hergestellt durch Alkoxylierung von Benzylalkohol mit Ethylenoxid und/oder Propylenoxid. Das Benzylalkoholalkoxylat kann sowohl als Ethoxylat, Propoxylat oder als Mischalkoxylat aus Ethylenoxid und Propylenoxid vorliegen, wobei Ethylenoxid und Propylenoxid blockweise oder statistisch an den Benzylalkohol angelagert werden können. Die Alkoxylierung erfolgt durch anionische, sauer oder alkalisch katalysierte Anlagerung von Ethylenoxid und/oder Propylenoxid, wobei der mittlere Alkoxylierungsgrad 3 bis 10, vorzugsweise 4 bis 8 beträgt.

In einer bevorzugten Ausführungsform ist der Gehalt der erfindungsgemäßen wässrigen Tensidlösung an Wasser ad 100 Gew.-%.

Die erfindungsgemäßen wässrigen Tensidlösungen sind bei Raumtemperatur von 25 °C transparente Flüssigkeiten von niedriger Viskosität und lassen sich mittels Pumpen einfach dosieren und fördern. Weiterhin lassen sich die erfindungsgemäßen wässrigen Tensidlösungen einfach mit Wasser weiter verdünnen.

Ein weiterer Gegenstand der Erfindung ist ein Verfahren zur Emulsionspolymerisation, indem man 1,0 bis 70,0 Gew.-% mindestens eines olefinisch ungesättigten Monomers mittels radikalischer Polymerisation in Gegenwart von 0,01 bis 5,0 Gew.-% der erfindungsgemäßen wässrigen Tensidlösung und gegebenenfalls 0 bis 5,0 Gew.-% eines anionischen Tensides umsetzt.

Ein weiterer Gegenstand der Erfindung ist die Verwendung von 0,01 bis 5,0 Gew.-% der erfindungsgemäßen wässrigen Tensidlösung und gegebenenfalls 0 bis 5,0 Gew.-% eines anionischen Tensides als Emulgator in der radikalischen Emulsionspolymerisation von olefinisch ungesättigten Monomeren.

Die Angaben zu Gewichtsprozenten bei Verfahren und Verwendung beziehen sich auf das Gewicht des zur Emulsionspolymerisation fähigen Reaktionsgemischs.

Unter olefinisch ungesättigten Monomeren versteht man Verbindungen, die eine oder mehrere, bevorzugt eine olefinische Doppelbindung enthalten, und die der radikalischen Polymerisation zugänglich sind. Bevorzugte olefinisch ungesättigte Monomere sind
- Vinylmonomere, wie Carbonsäureester des Vinylalkohols, beispielsweise Vinylacetat, Vinylpropionat, Vinylether der Isononansäure oder der Isodecansäure, die auch als C₉ und C₁₀-Versaticsäuren bezeichnet werden,
- Arylsubstituierte Olefine, wie Styrol und Stilben,
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Tridecyacrylat, Stearylacrylat, Hydroxyethylacrylat, Hydroxypropylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dipentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali- und Ammoniumsalze, wie Vinylsulfonsäure, Vinylphosphonsäure, Acrylamidomethylpropansulfonsäure und ihre Alkali- und Ammonium-, Alkylammonium- und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, Acrylamid, Methacrylamid, N-Methylacrylamid, N-Ethylacrylamid, N-Propylacrylamid, N-Methylolacrylamid sowie die entsprechenden Methacrylsäurederivate und Vinylmethylacetamid.

In einer bevorzugten Ausführungsform werden die oben genannten Monomere mit weiteren Comonomeren, vorzugsweise Olefinen oder halogenierten Olefinen mit 2 bis 8 Kohlenstoffatomen wie z.B. Ethylen, Propen, Butene, Pentene, 1,3-Butadien, Chloropren, Vinylchlorid, Vinylidenchlorid, Vinylidenfluorid und Tetrafluorethylen polymerisiert.

### Beispiele 1 - 13 (Vergleichsbeispiele) und Beispiele 14 - 16

### Tensidlösungen

Festpunkt wässriger Lösungen eines linearen, gesättigten C₁₂/C₁₄-Fettalkoholethoxylates mit 30 Mol Ethylenoxid

Lösevermittler
- PEG 1000: Polyethylenglykol mit einem Molekulargewicht von 1000 g/mol (Vergleichsbeispiel)
- PEG 4000: Polyethylenglykol mit einem Molekulargewicht von 4000 g/mol (Vergleichsbeispiel)
- Dodekandiol + 8 EO: 1,2-Dodekandiol umgesetzt mit 8 Mol Ethylenoxid (Vergleichsbeispiel)
- Polyglykol P 31/300: Pentaerythritol-Mischalkoxylat mit einem molaren Verhältnis von Ethylenoxid zu Propylenoxid von 4:1 und einem mittleren Molekulargewicht von ca. 5000 g/mol (Vergleichsbeispiel)
- Genapol BA 040: Benzylalkohol umgesetzt mit 4 Mol Ethylenoxid mit einem Gehalt an leicht flüchtigen Verbindungen, insbesondere nichtumgesetztem Benzylalkohol von < 1 %

**Tabelle 1**

| Beispiel | | 1 | 2 | 3 | 4 |
|---|---|---|---|---|---|
| Fettalkoholethoxylat | [%] | 65 | 60 | 55 | 50 |
| PEG 1000 | [%] | 0 | 5 | 10 | 15 |
| Wasser | [%] | 35 | 35 | 35 | 35 |
| Summe | [%] | 100 | 100 | 100 | 100 |
| | | | | | |
| Festpunkt | [° C] | 30 | 25 | 15 | 10 |
| Brookfield - Viskosität bei 25°C | [mPas] | n.b. | n.b. | 1635 | 920 |

| | | | | | |
|---|---|---|---|---|---|
| n.b. nicht bestimmt | | | | | |

**Tabelle 2**

| Beispiel | | 5 | 6 | 7 | 8 | 9 | 10 |
|---|---|---|---|---|---|---|---|
| Fettalkoholethoxylat | [%] | 60 | 55 | 50 | 60 | 55 | 50 |
| PEG 4000 | [%] | 5 | 10 | 15 | - | - | - |
| Dodekandiol + 8 EO | [%] | - | - | - | 5 | 10 | 15 |
| Wasser | [%] | 35 | 35 | 35 | 35 | 35 | 35 |
| Summe | [%] | 100 | 100 | 100 | 100 | 100 | 100 |
| | | | | | | | |
| Festpunkt | [°C] | 15 | 10 | 10 | 20 | 10 | 6 |
| Brookfield - Viskosität bei 25°C | [mPas] | 2125 | 1390 | 1320 | 3050 | 860 | 515 |

**Tabelle 3**

| Beispiel | | 11 | 12 | 13 | 14 | 15 | 16 |
|---|---|---|---|---|---|---|---|
| Fettalkoholethoxylat | [%] | 60 | 55 | 50 | 60 | 55 | 50 |
| Polyglykol P31/300 | [%] | 5 | 10 | 15 | - | - | - |
| Genapol BA 040 | [%] | - | - | - | 5 | 10 | 15 |
| Wasser | [%] | 35 | 35 | 35 | 35 | 35 | 35 |
| Summe | [%] | 100 | 100 | 100 | 100 | 100 | 100 |
| | | | | | | | |
| Festpunkt | [° C] | 20 | 10 | 10 | 20 | 8 | 6 |
| Brookfield - Viskosität bei 25°C | [mPas] | 2800 | 1264 | 920 | 1480 | 1333 | 355 |

### Beispiel 17

### Emulsionspolymerisation

Es werden 1060 g einer Monomeremulsion bestehend aus folgenden Komponenten durch Zugabe in ein Glasgefäß und unter Rühren hergestellt.

| | |
|---|---|
| 215,4 g | vollentsalztes Wasser, |
| 25,0 g | einer 27 %igen Lösung eines Alkylpolyethylenglykolethersulfates, Natriumsalz mit 7 Ethylenoxideinheiten (Emulsogen^{®} EPA 073, Fa. Clariant), |
| 32,1 g | der erfindungsgemäßen, wässrigen Tensidlösung aus Beispiel 15, |
| 7,5 g | Acrylsäure (Monomer), |
| 15,0 g | Methacrylsäure (Monomer), |
| 15,0 g | Methacryamid (Monomer), |
| 412,0 g | 2-Ethylhexylacrylat (Monomer), |
| 338,0 g | Styrol (Monomer). |

Parallel wird eine Initiatorlösung bestehend aus 2,6 g Ammoniumperoxodisulfat und 71,7 g vollentsalztem Wasser hergestellt. In einem 2 Liter Reaktionsgefäß werden folgende Komponenten vorgelegt:

| | |
|---|---|
| 374,0 g | vollentsalztes Wasser und |
| 2,8 g | einer 27 %igen Lösung eines Alkylpolyethylenglykolethersulfates, Natriumsalz mit 7 Ethylenoxideinheiten (Emulsogen^{®} EPA 073, Fa. Clariant). |

Unter Stickstoffatmosphäre und Rühren mit einem Ankerrührer wird die Emulgatorlösung im Reaktionsgefäß auf 80 °C erwärmt und 23,0 g der Monomeremulsion und 14,9 g der Initiatorlösung zugegeben. Sobald die radikalische Polymerisationsreaktion beginnt, steigt die Temperatur des Reaktionsgemisches an und die Reaktionswärme wird durch Kühlung des Reaktionsgefäßes abgeführt. Die restliche Monomeremulsion und 29,7 g Initiatorlösung werden über einen Zeitraum von 3 Stunden bei 80 °C dosiert. Anschließend werden weitere 29,7 g Initiatorlösung hinzugegeben und eine Stunde bei 80 °C gerührt. Die erhaltene wässrige Polymerdispersion wird auf 60 °C abgekühlt, 21,4 g einer 7 %igen tert.-Butylhydroperoxidlösung hinzugegeben und eine weitere Stunde bei 60 °C gerührt, um nicht umgesetzte Monomeren möglichst vollständig zu polymerisieren. Aus demselben Grund werden anschließend 30,0 g einer 5 %igen Natriumdisulfitlösung dosiert und eine weitere Stunde bei 60 °C gerührt. Danach wird die wässrige Polymerdispersion abgekühlt und der pH-Wert mit 37,5 g einer 10 %igen Natriumhydroxidlösung auf 7 - 8 eingestellt.

Die Polymerdispersion ist eine stabile, milchige Flüssigkeit mit folgenden Eigenschaften:

| Test | Ergebnis |
|---|---|
| Feststoffgehalt | 50,1 Gew.-% |
| Koagulat | 312 ppm |
| Teilchengröße | 144 nm |
| Viskosität | 1066 mPas |
| Gefrier-Tau-Stabilität | Nach 5 Zyklen stabil |
| Lagerstabilitätstest | stabil |
| Elektrolytbeständigkeit | stabil |

## Patentansprüche

1. Wässrige Tensidlösungen, enthaltend
(A) 50,0 bis 90,0 Gew.-% eines Ethoxylates linearer, gesättigter oder ungesättigter Fettalkohole der Formel (I), 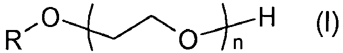 worin
R ein linearer, Alkyl- oder Alkenylrest mit 6 bis 22 Kohlenstoffatomen,
n eine ganze Zahl von 3 bis 100,
ist,
(B) 0,01 bis 20,0 Gew.-% eines Benzylalkoholalkoxylates der Formel (II), 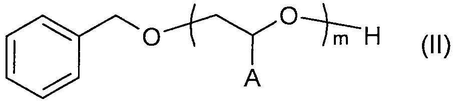 worin
A ein Wasserstoffatom oder eine Methylgruppe,
m eine Zahl von 3 bis 10 darstellt, und
(C) Wasser.

2. Wässrige Tensidlösungen nach Anspruch 1, enthaltend weitere übliche Nebenprodukte ausgewählt aus folgenden Komponenten:
Diethylenglykol,
Polyethlyenglykole,
Propylenglykol,
Dipropylenglykol,
Polypropylenglykole,
Mischpolymere aus Ethylenglykol und Propylenglykol, Natrium-, Kalium-, Calciumsalze der Essigsäure, Propionsäure, Milchsäure oder höherer Carbonsäuren.

3. Wässrige Tensidlösung nach Anspruch 1 und/oder 2, worin der Anteil von Wasser ad 100 Gew.-% ist.

4. Wässrige Tensidlösung nach einem oder mehreren der Ansprüche 1 - 3, worin n eine Zahl von 8 bis 50 ist.

5. Wässrige Tensidlösung nach einem oder mehreren der Ansprüche 1 - 4, worin R ein Alkyl- oder Alkenylrest mit 12 - 18 Kohlenstoffatomen ist.

6. Wässrige Tensidlösung nach einem oder mehreren der Ansprüche 1 - 5, worin A für Wasserstoff steht.

7. Wässrige Tensidlösung nach einem oder mehreren der Ansprüche 1 - 6, worin m für 4 bis 8 steht.

8. Verfahren zur Herstellung einer Polymeremulsion, indem man mindestens ein olefinisch ungesättigtes Monomer mittels radikalischer Polymerisation in Gegenwart von 0,01 bis 5 Gew.-%, bezogen auf das Gewicht der Reaktionsmischung, einer wässrigen Tensidlösung nach einem oder mehrere der Ansprüche 1 - 7, umsetzt.

9. Verfahren nach Anspruch 8, worin die Menge olefinisch ungesättigter Monomere zwischen 1 und 70 Gew.-%, bezogen auf das Gewicht der Reaktionsmischung, liegt.

10. Verfahren nach Anspruch 8 und/oder 9, worin zusätzlich bis zu 5 Gew.-% eines anionischen Tensids zugegen sind.

11. Verfahren nach einem oder mehrere der Ansprüche 9 bis 11, worin die olefinisch ungesättigten Monomere ausgewählt sind aus Vinylmonomeren, Arylsubstituierten Olefinen, olefinisch ungesättigten Carbonsäureestern, olefinisch ungesättigten Dicarbonsäureester, olefinisch ungesättigten Carbonsäuren und Dicarbonsäuren, und ihren Natrium-, Kalium- und Ammoniumsalzen, olefinisch ungesättigten Sulfonsäuren und Phosphonsäuren und ihren Alkali- und Ammoniumsalzen, olefinisch ungesättigten Aminen, Ammoniumsalzen, Nitrilen und Amiden, und Vinylmethylacetamid.

12. Verwendung von 0,01 bis 5,0 Gew.-% der wässrigen Tensidlösung nach einem oder mehreren der Ansprüche 1 - 7, und gegebenenfalls 0 bis 5,0 Gew.-% eines anionischen Tensides, als Emulgator in der radikalischen Emulsionspolymerisation von olefinisch ungesättigten Monomeren.

## Claims

1. An aqueous surfactant solution comprising
(A) 50.0 to 90.0% by weight of an ethoxylate of linear, saturated or unsaturated fatty alcohols of the formula (I), 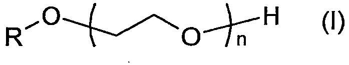 in which
R is a linear, alkyl or alkenyl residue having 6 to 22 carbon atoms,
n is an integer from 3 to 100,
(B) 0.01 to 20.0% by weight of a benzyl alcohol alkoxylate of the formula (II), 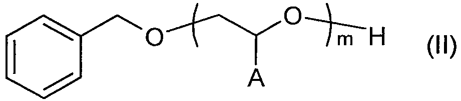 in which
A is a hydrogen atom or a methyl group,
m is a number from 3 to 10, and
(C) water.

2. The aqueous surfactant solution as claimed in claim 1, comprising further customary by-products selected from the following components:
diethylene glycol,
polyethylene glycols,
propylene glycol,
dipropylene glycol,
polypropylene glycols,
mixed polymers of ethylene glycol and propylene glycol, sodium, potassium or calcium salts of acetic acid, propionic acid, lactic acid or higher carboxylic acids.

3. The aqueous surfactant solution as claimed in claim 1 and/or 2, wherein the proportion of water is made up to 100% by weight.

4. The aqueous surfactant solution as claimed in one or more of claims 1 - 3, wherein n is a number from 8 to 50.

5. The aqueous surfactant solution as claimed in one or more of claims 1 - 4, wherein R is an alkyl or alkenyl residue having 12 to 18 carbon atoms.

6. The aqueous surfactant solution as claimed in one or more of claims 1 - 5, wherein A is hydrogen.

7. The aqueous surfactant solution as claimed in one or more of claims 1 - 6, wherein m is 4 to 8.

8. A method for preparing a polymer emulsion by reacting at least one olefinically unsaturated monomer by means of free radical polymerization in the presence of 0.01 to 5% by weight of an aqueous surfactant solution as claimed in one or more of claims 1 - 7, based on the weight of the reaction mixture.

9. The method as claimed in claim 8, wherein the amount of olefinically unsaturated monomers is between 1 and 70% by weight, based on the weight of the reaction mixture.

10. The method as claimed in claim 8 and/or 9, wherein additionally up to 5% by weight of an anionic surfactant is present.

11. The method as claimed in one or more of claims 9 to 11, wherein the olefinically unsaturated monomers are selected from vinyl monomers, aryl-substituted olefins, olefinically unsaturated carboxylic esters, olefinically unsaturated dicarboxylic esters, olefinically unsaturated carboxylic acids and dicarboxylic acids, and sodium, potassium and ammonium salts thereof, olefinically unsaturated sulfonic acids and phosphonic acids and alkali metal and ammonium salts thereof, olefinically unsaturated amines, ammonium salts, nitriles and amides, and vinylmethylacetamide.

12. The use of 0.01 to 5.0% by weight of the aqueous surfactant solution as claimed in one or more of claims 1 - 7, and optionally 0 to 5.0% by weight of an anionic surfactant, as emulsifier in the free radical emulsion polymerization of olefinically unsaturated monomers.

## Revendications

1. Solutions aqueuses de tensioactifs, contenant
(A) 50,0 à 90,0 % en poids d'un produit d'éthoxylation d'alcools gras linéaires, saturés ou insaturés, de formule (I), 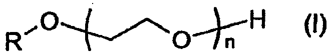 dans laquelle
R est un radical alkyle ou alcényle linéaire ayant de 6 à 22 atomes de carbone,
n est un nombre entier valant de 3 à 100,
(B) 0,01 à 20,0 % en poids d'un produit d'alcoxylation d'alcool benzylique de formule (II), 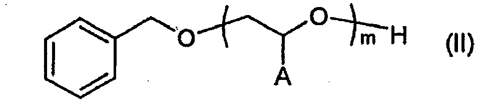 dans laquelle
A représente un atome d'hydrogène ou un groupe méthyle,
m représente un nombre valant de 3 à 10, et
(C) de l'eau.

2. Solutions aqueuses de tensioactifs selon la revendication 1, contenant des produits secondaires supplémentaires usuels choisis parmi les composants suivantes :
diéthylèneglycol,
polyéthylèneglycols,
propylèneglycol,
dipropylèneglycol,
polypropylèneglycols,
copolymères d'éthylèneglycol et propylèneglycol, sels de sodium, potassium, calcium de l'acide acétique, l'acide propionique, l'acide lactique ou d'acides carboxyliques supérieurs.

3. Solution aqueuse de tensioactif selon la revendication 1 et/ou la revendication 2, dans laquelle la proportion d'eau est le complément à 100 %.

4. Solution aqueuse de tensioactif selon une ou plusieurs des revendications 1 à 3, dans laquelle n est un nombre entier valant de 8 à 50.

5. Solution aqueuse de tensioactif selon une ou plusieurs des revendications 1 à 4, dans laquelle R est un radical alkyle ou alcényle ayant de 12 à 18 atomes de carbone.

6. Solution aqueuse de tensioactif selon une ou plusieurs des revendications 1 à 5, dans laquelle A représente un atome d'hydrogène.

7. Solution aqueuse de tensioactif selon une ou plusieurs des revendications 1 à 6, dans laquelle m représente un nombre valant de 4 à 8.

8. Procédé pour la préparation d'une émulsion de polymère, par mise en réaction d'au moins un monomère à insaturation oléfinique par polymérisation radicalaire en présence de 0,01 à 5 % en poids, par rapport au poids du mélange réactionnel, d'une solution aqueuse de tensioactif selon une ou plusieurs des revendications 1 à 7.

9. Procédé selon la revendication 8, dans lequel la quantité de monomères à insaturation oléfinique est comprise entre 1 et 70 % en poids, par rapport au poids du mélange réactionnel.

10. Procédé selon la revendication 8 et/ou la revendication 9, dans lequel on ajoute en plus jusqu'à 5 % en poids d'un tensioactif anionique.

11. Procédé selon une ou plusieurs des revendications 9 à 11, dans lequel les monomères à insaturation oléfinique sont choisis parmi des monomères vinyliques, des oléfines substituées par aryle, des esters d'acides carboxyliques à insaturation oléfinique, des esters d'acides dicarboxyliques à insaturation oléfinique, des acides carboxyliques et acides dicarboxyliques à insaturation oléfinique et leurs sels de sodium, potassium et ammonium, des acides phosphoniques et acides sulfoniques à insaturation oléfinique et leurs sels de métaux alcalins et d'ammonium, des amines à insaturation oléfinique, des sels d'ammonium, des nitriles et amides, et le vinylméthylacétamide.

12. Utilisation de 0,01 à 5,0 % en poids de la solution aqueuse de tensioactif selon une ou plusieurs des revendications 1 à 7, et éventuellement 0 à 5,0 % en poids d'un tensioactif anionique, en tant qu'émulsifiant dans la polymérisation radicalaire en émulsion de monomères à insaturation oléfinique.
